Europäisches Patentamt

European Patent Office

Office européen des brevets

(19)

(11) Veröffentlichungsnummer: **0 195 338**
**B1**

(12) **EUROPÄISCHE PATENTSCHRIFT**

(45) Veröffentlichungstag der Patentschrift:
05.09.90

(21) Anmeldenummer: 86103141.7

(22) Anmeldetag: 08.03.86

(51) Int. Cl.⁵: **B23K 31/02**, B23K 1/00,
B23K 1/19, B23K 1/08

(54) Verfahren zum Befestigen von Hartmetallplatten an Werkzeugen, Verschleissteilen usw.

(30) Priorität: 11.03.85 DE 3508603

(43) Veröffentlichungstag der Anmeldung:
24.09.86 Patentblatt 86/39

(45) Bekanntmachung des Hinweises auf die Patenterteilung:
05.09.90 Patentblatt 90/36

(84) Benannte Vertragsstaaten:
AT CH DE FR GB LI

(56) Entgegenhaltungen:
EP-A- 0 100 919
EP-A- 0 108 877
GB-A- 551 093
US-A- 3 077 798
US-A- 4 444 587
US-A- 4 516 716

SCHWEISSEN + SCHNEIDEN, Band 32, Nr. 5, Mai 1980,
Seiten 171-175, Düsseldorf, DE; E. LUGSCHEIDER:
"Hochtemperaturlöten, Stand und
Entwicklungstendenzen - Lote"

(73) Patentinhaber: Akyol, Atilla, Dr.-Ing. Dipl.-Chem., Am
Kasslau 6, D-4515 Bad Essen- Linne(DE)

(72) Erfinder: Akyol, Atilla, Dr.-Ing. Dipl.-Chem., Am
Kasslau 6, D-4515 Bad Essen- Linne(DE)

(74) Vertreter: Nau, Walter, Dipl.-Ing.,
Johann-Pullem-Strasse 8, D-5000 Köln 50(Sürth)(DE)

## Beschreibung

Die Erfindung bezieht sich auf ein Verfahren zum Befestigen von Hartmetallplatten-, schneiden und dgl. an Werkzeugen, Verschleißteilen und sonstigen Tragkörpern, deren Grundmaterial aus metallischem Werkstoff besteht, wobei die Teile zumindest zeitweilig gegeneinander fixiert sind und zum Befestigen in eine Schmelze eingetaucht werden.

Es ist allgemein bekannt, Hartmetallplatten oder dgl. an Werkzeugen durch Löten zu befestigen. Trotz aller Sorgfalt und größerem Aufwand bei der Lötarbeit treten immer wieder Fehlverbindungen auf, so daß sich die Hartmetallplatten vom Werkzeug lösen. Je nach dem wo diese hartmetallbewehrten Werkzeuge eingesetzt sind, ist ein Stillsetzen größerer Maschinen und Apparate erforderlich, was zu teuren und aufwendigen Unterbrechungen führt. Dies ist beispielsweise bei Maschinen im Erz- und Kohlebergbau der Fall.

Aufgabe der vorliegenden Erfindung ist es, die Befestigung der Hartmetallplatten-, schneiden und dgl. an Werkzeugen, Verschleißteilen und sonstigen Tragkörpern zu verbessern. Diese Aufgabe wird erfindungsgemäß dadurch gelöst, daß die Schmelze eine Nickel- oder Kobaltlegierung ist, daß der Schmelze Hartmetallteilchen, vorzugsweise Wolfram- und/oder Chromkarbidteilchen, in solchem Umfang zugesetzt sind, daß ein nicht unbeachtlicher Teil der Metallteilchen nicht in Lösung geht und daß das Wekzeug und dergl., soweit wie die Hartmetallplatten und dergl. reichen, vollständig in die Schmelze getaucht werden. In Weiterbildung der Erfindung wird vorgeschlagen, daß die Nickel- oder Kobaltlegierung in einem Schmelzbad bereitgestellt wird und durch Tauchen des Werkzeuges, Verschleißteils usw. auf deren Oberfläche aufgebracht wird. In weiterer Ausgestaltung der Erfindung nach den Patentansprüchen 2 bis 4 sind der Nickel- oder Kobaltlegierung Bor und/oder Silizium zur Schmelzpunkterniedrigung zugesetzt. Zwar sind Nickel und Eisen Hartlegierungen auch unter Zusatz von Bor und Silizium sowie der angegebenen Hartmetallteilchen durch die europäische Patentanmeldung 108 877 als solche bekannt. Dort werden jedoch diese Hartlegierungen auf Werkzeuge aufgebracht und stellen unmittelbar den Schneidenwerkstoff dar. Abgesehen davon, daß in dieser europäischen Patentanmeldung die Kobalt-Hartlegierung nicht genannt ist, ist durch diese Anmeldung weder bekannt noch nahegelegt, derartige Hartlegierungen zum Befestigen von Hartmetallplatten an Werkzeugen zu benutzen und dadurch den mit Unsicherheiten verbundenen Lötvorgang zu ersetzen. Durch diese neuen Verfahrensschritte werden nunmehr die Hartmetallplatten und dgl. sicher, dauerhaft und zielsicher an den gewünschten Werkzeugen usw. befestigt.

Die Hartmetallplatten und dgl. und die Werkzeuge usw. werden zunächst solange mittels einer Vorrichtung gegeneinander gepreßt bzw. gehalten, wie die Nickel- oder Kobaltlegierung bzw. -hartlegierung schmelzflüssig bzw. plastisch verformbar ist. Durch diesen Verfahrensschritt ist es möglich, die Hartmetallplatte und dgl. sehr exakt ausgerichtet und gut am Werkzeug zu befestigen. Eine exakte Bearbeitung der Flächen, insbesondere am Werkzeug, an der die Hartmetallplatten angebracht werden sollen, kann entfallen, da die Hartlegierung Ungenauigkeiten ausgleicht oder ausfüllt.

Zur Verbesserung der Befestigung können die Hartmetallplatten und dgl. vor ihrer Befestigung am Werkzeug usw. vorbehandelt, vorbeschichtet z.B. in den vorgeschlagenen Schmelzen tauchbeschichtet oder vorgewärmt werden. Eine noch sicherere Befestigung wird dadurch erreicht, daß die Metallplatte und dgl. sowie das Werkzeug usw. nachträglich zusätzlich mit einer der vorgenannten Hartlegierungen tauchbeschichtet werden oder daß eine oder mehrere Hartmetallegierungen nach den im weiteren noch beschriebenen Verfahrensschritten angebracht werden.

Insbesondere dann, wenn die Hartmetallplatten nicht nur einem abprassiven Verschleiß sondern auch hohen Schlag- und Abscherkräften ausgesetzt sind, ist es vorteilhaft, wenn die Nickel- oder Kobaltlegierung bzw. -hartlegierung nacheinander mehrschichtig durch Tauchen am Werkzeug usw. bzw. an der Hartmetallplatte und dgl. und am Werkzeug aufgebracht werden. Es ist auch möglich, daß die Nickel- oder Kobaltlegierung bzw.-Hartlegierung miteinander vermischt aufgebracht werden.

Je nach gegebenen Einsatzbedingungen bzw. Größe und Form des Werkzeuges und der Hartmetallplatte kann erfindungsgemäß auf das unbehandelte oder tauchbeschichtete Werkzeug usw. und/oder auf die Hartmetallplatte und dgl. eine niedrig schmelzende Nickelhartlegierung in Pulverform aufgebracht werden, danach die Teile im fixierten Zustand in einen Schutzgasofen bei ca. 1 000° bis 1 200°C bis zum Schmelzen der Nickelhartlegierung erhitzt und abschließend die Teile abgekühlt werden. Dadurch kann sich die Nickelhartlegierung im Schmelzzustand unter bestimmten Bedingungen intensiver und fester mit den beiden Teilen verbinden. Dabei können sowohl die Hartmetallplatten und/oder auch das Werkzeug usw. so einander angepaßt bzw. vorgeformt sein, daß ein Ineinandergreifen bzw. Verzahnen erfolgt. Eine derartige ineinandergreifende Oberflächengestaltung ist auch beim Befestigen nach den vorhergenannten Verfahrensschritten möglich.

Schließlich kann auch erfindungsgemäß in alternativer Weise die Hartmetallplatte und dgl. am Werkzeug usw. fixiert und durch Begießen bzw. Umgießen mit einer Nickel- oder Kobaltlegierungsschmelze bzw. -hartlegierungsschmelze und Erstarren der an der Hartmetallplatte und am Werkzeug haftenden Schmelze aneinander befestigt werden. Auch dabei kann eine besonders angepaßte Formgebung der Hartmetallplatte und des Werkzeuges von Vorteil sein. Es sei darauf hingewiesen, daß dabei die Hartmetallplatten und dgl. auch in beliebiger anderer Weise, z.B. durch Schrauben, vor der Anwendung des vorgeschlagenen Verfahrens fixiert werden kann. Dabei braucht es sich nur um eine provisorische Befestigung zu handeln, die ein Fixieren bis zur Befestigung durch das erfindungsgemäße Verfahren sicherstellt.

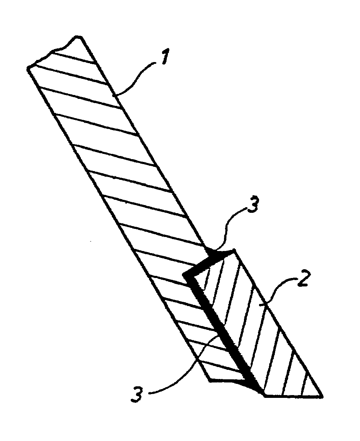

Zur weiteren Erläuterung der Erfindung wird auf die Zeichnung verwiesen, in der ein Ausführungsbeispiel dargestellt ist.

An dem Tragkörper 1 ist eine Hartmetallplatte 2 befestigt. Die Befestigung erfolgt durch eine Nickel- oder Kobaltlegierung 3, die im schmelzflüssigen Zustand die Hartmetallplatte umfaßt und durch Erstarren befestigt.

**Patentansprüche**

1. Verfahren zum Befestigen von Hartmetallplatten, -schneiden und dergl. an Werkzeugen, Verschleißteilen und sonstigen Tragkörpern, deren Grundmaterial aus metallischem Werkstoff besteht, wobei die Teile zumindest zeitweilig gegeneinander fixiert sind und zum Befestigen in eine Schmelze eingetaucht werden, dadurch gekennzeichnet, daß die Schmelze eine Nickel- oder Kobaltlegierung ist, daß der Schmelze Hartmetallteilchen, vorzugsweise Wolfram- und/oder Chromkarbidteilchen, in solchem Umfang zugesetzt sind, daß ein nicht unbeachtlicher Teil der Metallteilchen nicht in Lösung geht und daß das Werkzeug und dergl., soweit wie die Hartmetallplatten und dergl. reichen, vollständig in die Schmelze getaucht werden.

2. Verfahren nach Anspruch 1, dadurch gekennzeichnet, daß der Nickel- oder Kobaltlegierung Bor und/oder Silicium zur Schmelzpunkterniedrigung zugesetzt sind.

3. Verfahren nach einem der vorhergehenden Ansprüche, dadurch gekennzeichnet, daß die Hartmetallplatten und dergl. vor ihrer Befestigung am Werkzeug usw. vorbehandelt, vorbeschichtet, z.B. tauchbeschichtet, oder vorgewärmt werden.

4. Verfahren nach einem der vorhergehenden Ansprüche, dadurch gekennzeichnet, daß die Hartmetallplatten und dergl. sowie das Werkzeug usw. zur Verbesserung der Befestigung nachträglich zusätzlich in der zuvor beschriebenen Nickel- oder Kobaltlegierung tauchbeschichtet werden.

**Claims**

1. A method of fastening a hard-metal tip to a tool, to a part subject to wear or to any other part, the base material of the tool or part being metal, wherein the elements to be fastened to one another are at least temporarily fixed to each other and, for the purpose of fastening them, are dipped into a melt, characterized in that the melt is an alloy containing nickel or cobalt to which hard-metal particles, preferably tungsten and/or chromium-carbide particles, are added in such quantities that a not inconsiderable portion of the metal particles will not be melted, and in that the tool or the like will be dipped into the melt up to the entire length over which the hard-metal tip extends thereon.

2. A method according to claim 1, characterized in that boron and/or silicon are added, for the purpose of lowering the melting point, to the nickel or cobalt alloy.

3. A method according to any of the preceding claims, characterized in that the tip prior to being fastened to the tool or the like is pretreated, precoated, for example dip-coated, or preheated.

4. A method according to any of the preceding claims, characterized in that the hard-metal tip and the tool or the like, in order to further improve the fastening, are subsequently additionally dip-coated in the nickel or cobalt alloy already referred to.

**Revendications**

1. Procédé de fixation de plaquettes, tranchants et autres analogues, en métal ou alliage dur sur des outils, des parties soumises à l'usure et corps de support quelconques, dont la matière de base est constituée par un matériau métallique, ces éléments étant, tout au moins temporairement, plaqués l'un contre l'autre et, afin d'assurer la fixation, immergés dans un bain en fusion, procédé caractérisé en ce que le bain en fusion est constitué par un alliage de nickel ou de cobalt, en ce que, à ce bain en fusion, des particules d'alliage dur, de préférence des particules de carbure de tungstène et/ou de carbure de chrome, sont ajoutées dans une mesure telle, qu'une partie non négligeable des particules métalliques ne passe pas en solution, et en ce que l'outil et autres analogues, aussi loin que portent les plaquettes et autres analogues en métal ou alliage dur, sont plongés entièrement dans le bain de fusion.

2. Procédé selon la revendication 1, caractérisé en ce que du bore et/ou du silicium sont ajoutés à l'alliage de nickel ou de cobalt en vue d'abaisser le point de fusion.

3. Procédé selon l'une des revendications précédentes, caractérisé en ce que les plaquettes et autres analogues en métal ou alliage dur sont, avant leur fixation sur l'outil ou autre, pré-traitées, pré-enduites, par exemple enduites par immersion, ou bien pré-chauffées.

4. Procédé selon l'une des revendications précédentes, caractérisé en ce que les plaquettes et autres analogues en métal ou alliage dur, ainsi que l'outil ou autre, en vue d'améliorer la fixation, sont ultérieurement, en plus, enduits par immersion au moyen de l'alliage de nickel ou de cobalt décrit précédemment.